# FASCICULE DE BREVET EUROPEEN

(11) **EP 1 102 923 B1**
(45) Date de publication et mention de la délivrance du brevet: **15.10.2003**
(21) Numéro de dépôt: 99932975.8
(22) Date de dépôt: 26.07.1999
(51) Int. Cl.: F02B 19/10

(54) **DISPOSITIF ET PROCEDE D'ALLUMAGE POUR MOTEUR A COMBUSTION INTERNE ET PAROI DE SEPARATION CORRESPONDANTE**
VORRICHTUNG UND VERFAHREN ZUR ZÜNDUNG EINER BRENNKRAFTMASCHINE UND ENTSPRECHENDE TRENNWAND
DEVICE AND METHOD FOR IGNITING AN INTERNAL COMBUSTION ENGINE AND CORRESPONDING SEPARATING WALL

(30) Priorité: 31.07.1998 FR 9809892
(43) Date de publication de la demande: 30.05.2001
(73) Titulaire: UNIVERSITE D'ORLEANS, 45072 Orléans Cedex 02 (FR); Peugeot Citroen Automobiles SA, 92200 Neuilly sur Seine (FR)
(72) Inventeur: HIGELIN, Pascal, F-45650 St. Denis en Val (FR); MOREAU, Bruno, F-45100 Olivet (FR); ROBINET, Cyril, F-45000 Orléans (FR); PAJOT, Olivier, F-75013 Paris (FR)
(74) Mandataire: Michelet, Alain
(86) Numéro de dépôt international: FR9901832
(87) Numéro de publication internationale: WO00008317

(56) Documents cités:
- WO-A-91/12418
- DE-A- 3 015 181
- DE-A- 4 404 899
- FR-A- 2 193 417
- US-A- 4 248 189
- US-A- 4 926 818
- US-A- 5 307 772
- PATENT ABSTRACTS OF JAPAN vol. 010, no. 323 (M-531), 5 novembre 1986 (1986-11-05) & JP 61 129418 A (NISSAN MOTOR CO LTD), 17 juin 1986 (1986-06-17)

## Description

La présente invention se rapporte à un dispositif et un procédé d'allumage pour moteur à combustion interne, ainsi qu'à une paroi de séparation correspondante.

Les moteurs à combustion interne à allumage commandé font l'objet d'efforts conséquents afin de réduire la consommation de carburant, d'émissions polluantes et de l'irrégularité cyclique. Il a été ainsi proposé d'utiliser des mélanges air-carburant pauvres. La richesse d'un mélange est évaluée par rapport à une richesse 1, qui correspond à une combustion du carburant dans les conditions stoechiométriques. La richesse du mélange est limitée inférieurement et supérieurement par une richesse au-delà de laquelle la propagation de flamme ne peut plus avoir lieu. Le mélange comburant/carburant utilisé est pauvre et/ou dilué par recirculation de gaz d'échappement.

Les mélanges pauvres ont cependant pour inconvénient une augmentation importante de combustions partielles et de ratés à l'allumage.

Dans le document US-4.926.818, il est décrit un procédé et un dispositif de génération de jets pulsés destiné à former des poches de combustion tourbillonnaire. Le dispositif décrit comprend une chambre principale contenant un mélange combustible principal et dans laquelle se déplace un piston et une préchambre recevant des réactifs et communiquant avec la chambre principale par des orifices pratiqués dans une paroi. L'allumage des réactifs dans la préchambre produit des jets de gaz en combustion, qui enflamment le mélange principal contenu dans la charge principale contenue dans la chambre principale par convection du front de flamme.

La présente invention concerne un dispositif d'allumage pour moteur à combustion interne qui peut présenter les avantages suivants par rapport à un dispositif d'allumage classique, mettant en jeu une bougie d'allumage disposée dans une chambre qui contient des produits réactifs:
- augmentation du rendement,
- diminution considérable du cliquetis, donc possibilité d'augmentation du rapport volumétrique,
- rapidité de la montée en pression lors d'un allumage,
- faible dispersion cyclique (comparable à celle d'un moteur du type Diesel),
- vitesse et répétabilité élevées de l'initiation et du développement de la combustion,
- large plage d'utilisation du moteur en terme de LOL (Lean Operating Limit), c'est-à-dire de richesse la plus faible du point moteur pouvant être atteinte avec une covariance de PMI (Pression Moyenne Indiquée) de 5%, et en termes d'exploration de couple,
- consommation réduite pour le point de ralenti,
- diminution des émissions polluantes de monoxyde de carbone et d'oxydes d'azote , et
- réduction de l'avance à l'allumage optimale pour le rendement.

L'invention concerne également une paroi de séparation entre une préchambre et une chambre principale, correspondant au dispositif de l'invention.

L'invention a aussi pour objet un procédé d'allumage pour moteur à combustion interne, ayant les avantages précités.

A cet effet, l'invention concerne un dispositif d'allumage d'un moteur à combustion interne, comprenant:
- une chambre principale destinée à contenir un mélange combustible principal et munie d'un système de compression de ce mélange,
- une préchambre destinée à recevoir des réactifs, cette préchambre communiquant avec la chambre principale par au moins un passage, et
- un système d'allumage des réactifs contenus dans la préchambre.

Selon l'invention, les passages entre la préchambre et la chambre principale empêchent le passage d'un front de flamme tout en permettant le passage de composés instables provenant de la combustion des réactifs contenus dans la préchambre. Le système de compression de la chambre principale et l'ensemencement du mélange principal en les composés instables permettent une auto-inflammation en masse du mélange principal.

Ainsi, contrairement au moteur à allumage commandé conventionnel ou au moteur décrit dans le brevet US-4.926.818, l'allumage du mélange principal n'est pas obtenu par la propagation d'un front de flamme, mais par l'ensemencement et la compression du mélange principal du moteur.

L'auto-inflammation dans un large volume permet une montée en pression très rapide, faible cliquetis et une bonne répétabilité.

Par rapport à un moteur à allumage par compression (moteur Diesel), le dispositif selon l'invention permet d'éliminer la phase de préparation du mélange principal constitué d'un mélange air-liquide et la phase de combustion diffusive. On réduit ainsi considérablement les délais à l'allumage (transfert thermique, vaporisation) et on peut réduire considérablement la production de suies.

Le dispositif d'allumage selon l'invention rassemble ainsi les avantages des deux grandes familles de moteurs jusqu'alors utilisés: ceux à allumage commandé et ceux à allumage par compression.

Le système d'allumage dans la préchambre est préférentiellement un système à éclateur.

La mise en oeuvre successive des opérations d'alimentation de la préchambre et de la chambre principale respectivement en les réactifs et en le mélange principal, d'allumage des réactifs de la préchambre et de compression du mélange principal ensemencé des composées instables est préférentiellement cyclique.

Le mélange principal de la chambre principale et les réactifs de la préchambre sont constitués de mélanges comburant-carburant, les mélanges de la préchambre et de la chambre principale étant de préférence respectivement riche et pauvre. Dans une forme de réalisation, les combustibles sont les mêmes pour le mélange principal et pour les réactifs. Dans une autre forme de réalisation, ils sont distincts.

Avantageusement, le dispositif d'allumage comporte des moyens de mélange comburant-carburant en amont de la préchambre. Dans une autre forme de réalisation, la chambre principale est munie de moyens d'introduction d'air, permettant d'effectuer le mélange dans cette chambre.

Le système de compression de la chambre principale comprend préférentiellement un système à piston, qui permet d'accroître périodiquement la pression dans la chambre principale et, conséquemment, la température.

Le ou les passages entre la préchambre et la chambre principale ont pour fonction de produire une extinction de flamme (flame quenching) en laissant passer les composés instables.

La combustion dans la préchambre génère des composés instables ainsi qu'une augmentation de la pression. Lorsque la pression dans la préchambre est plus élevée que dans la chambre principale, les composés instables sont expulsés dans la chambre principale.

Les composés instables obtenus par la combustion des réactifs dans la préchambre comprennent des produits intermédiaires de combustion très actifs, aptes à initier l'oxydation du mélange principal sous l'effet d'une compression par le piston, ou autre moyen d'élévation de température.

Une bonne efficacité du dispositif d'allumage implique une richesse supérieure à 1 du mélange contenu dans la préchambre, de manière à rendre disponible une quantité satisfaisante d'espèces instables non oxydées.

Dans un mode de réalisation préféré, les passages entre la préchambre et la chambre principale sont constitués par des orifices pratiqués dans une paroi de séparation imperméable aux composés instables, ces orifices ayant des dimensions suffisamment petites pour provoquer une extinction de flamme.

Avantageusement, chacun de ces orifices a un diamètre inférieur ou égal à 1 mm. De plus, il est également avantageux que chacun des orifices ait une longueur inférieure ou égale à son diamètre. De cette manière, le moins possible de composés instables sont piégés aux parois. Par « longueur », on entend la dimension des orifices selon une direction perpendiculaire à la surface de la paroi de séparation.

Dans un autre mode de réalisation des passages, la préchambre et la chambre principale sont séparées par une paroi de séparation choisie parmi une grille et une cloison formée d'un matériau poreux.

Le moteur à combustion a avantageusement un rapport volumétrique compris entre 9 et 15. Ce rapport volumétrique élevé par rapport aux moteurs à allumage commandé traditionnels est possible grâce à la réduction considérable, voire l'élimination, du cliquetis. Ce rapport est ainsi voisin de celui d'un moteur à allumage par compression.

Préférentiellement, le dispositif d'allumage comporte des moyens d'alimentation de la préchambre en un mélange riche en carburant et des moyens d'alimentation de la chambre principale en un mélange pauvre en carburant. Cette réalisation permet d'optimiser les performances du dispositif d'allumage, puisqu'une faible quantité de mélange riche contenue dans la préchambre suffit à enflammer une grande quantité de mélange pauvre contenu dans la chambre principale. En tout état de cause, la richesse du mélange riche ne doit pas dépasser la limite supérieure d'inflammabilité et la richesse du mélange pauvre ne doit pas descendre en deçà de la limite inférieure d'inflammabilité.

A titre d'exemple, le propane servant de combustible, les richesses respectives des mélanges riches de la préchambre et pauvre de la chambre principale sont respectivement légèrement inférieure à 1,9 et supérieure à 0,55.

Le dispositif d'allumage selon l'invention est avantageusement couplé à d'autres techniques, telles que l'injection directe, le G.P.L. et/ou la stratification de la charge.

L'invention a également pour objet une paroi de séparation entre une préchambre et une chambre principale d'un dispositif d'allumage conforme à l'invention.

L'invention concerne aussi un procédé d'allumage d'un moteur à combustion interne. Selon ce procédé:
- on introduit un mélange combustible principal dans une chambre principale et des réactifs dans une préchambre communiquant avec la chambre principale par au moins un passage,
- on brûle les réactifs contenus dans la préchambre, et
- on provoque une inflammation du mélange principal à partir de la combustion des réactifs.

Selon l'invention, on laisse passer des composés instables issus de la combustion des réactifs et on empêche tout passage d'un front de flamme, de la préchambre vers la chambre principale, au moyen de ces passages, et
- on provoque une auto-inflammation en masse du mélange principal ensemencé des composés instables dans la chambre principale.

L'invention sera mieux comprise et d'autres buts, avantages et caractéristiques de celle-ci apparaîtront plus clairement à la lecture de la description qui suit, faite en regard des dessins annexés sur lesquels:
La Figure 1 montre en coupe un cylindre d'un moteur à combustion interne équipé d'un dispositif d'allumage selon l'invention.
La Figure 2 représente un agrandissement de la zone entourant la préchambre du dispositif d'allumage représenté à la Figure 1.
La Figure 3 montre des courbes comparatives donnant la pression cylindre (en bar) en fonction de l'angle vilebrequin (en DV ou degrés vilebrequin) sur un cycle moyen, d'une part pour un dispositif d'allumage commandé traditionnel avec bougie et d'autre part pour un dispositif d'allumage selon l'invention, correspondant aux Figures 1 et 2.
La Figure 4 représente des courbes comparatives donnant la pression cylindre (en bar) en fonction du volume de la chambre (en cm³) sur un cycle moyen, pour les mêmes dispositifs d'allumage que sur la Figure 3; et
La Figure 5 schématise le nombre d'occurrences (en pourcentage) en fonction de la durée de combustion de 5% (exprimée en DV) de la charge principale, pour les mêmes dispositifs d'allumage que ceux des Figures 3 et 4.
La Figure 6 est une photo permettant de visualiser la flamme obtenue dans la chambre principale grâce au dispositif d'allumage des Figures 1 et 2.

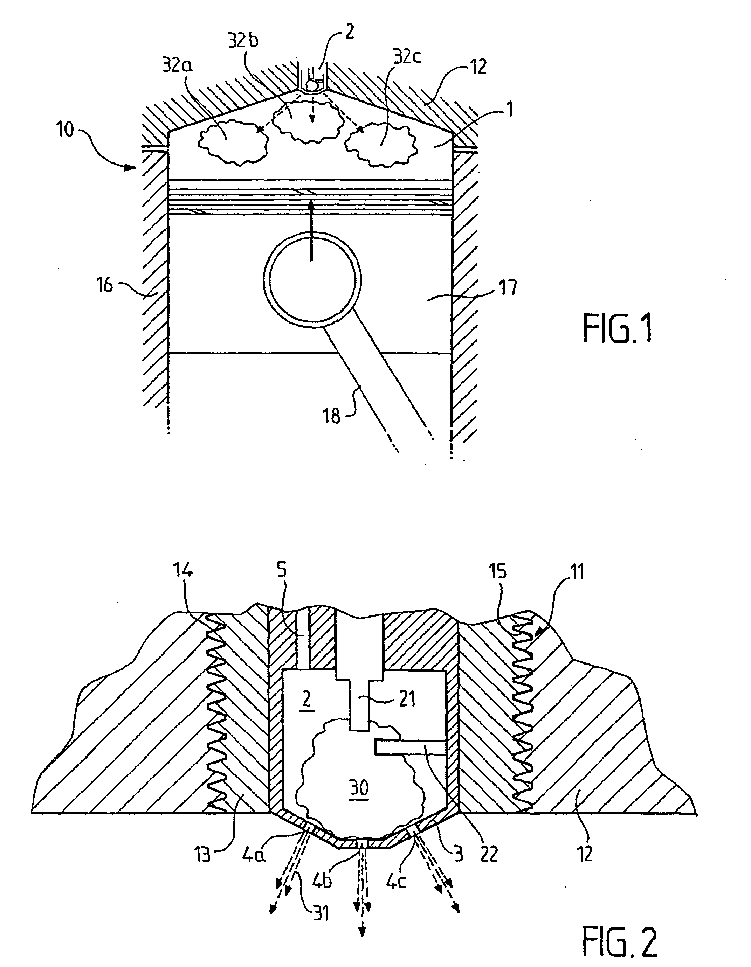

Un cylindre 10 d'un moteur à combustion interne, représenté sur la Figure 1 comporte une chambre principale 1 délimitée par une chemise 16 et fermée supérieurement par une culasse 12. La chambre principale 1 contient un piston 17 actionné en translation par une bielle 18.

Un générateur de composés instables 11, détaillé sur la Figure 2, est fixé dans la culasse 12 de manière à être attenant à la chambre principale 1 par l'intermédiaire d'une paroi de séparation 3. Le générateur 11 comporte un corps 13 avec filetage extérieur 14, qui se visse dans un taraudage 15 intérieur de la culasse 12 de manière à pouvoir visser le générateur 11.

Le générateur 11 contient une cavité intérieure constituant une préchambre 2. La préchambre 2 a par exemple un volume voisin de 0,5 cm³. Une arrivée 5 permet d'alimenter cette préchambre 2 en un mélange air-combustible constitué en amont. Dans une variante de réalisation, l'arrivée 5 est destinée à introduire du carburant, l'air étant mélangé à ce carburant dans la préchambre 2.

La préchambre 2 est munie d'un système d'allumage comprenant une électrode centrale 21 et une électrode de masse 22.

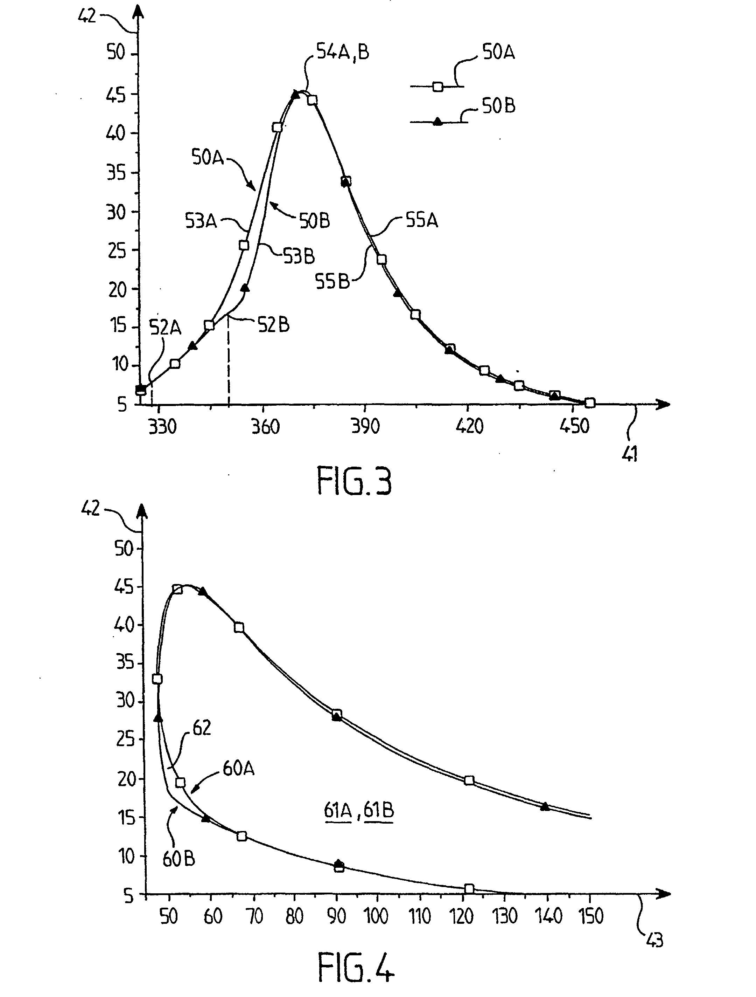

La paroi de séparation 3, par exemple convexe vers la chambre principale 1, est pourvue de différents orifices 4a-4c, représentés sur la Figure 2, et 4d non représenté. Chacun de ces orifices 4a - 4d a un diamètre inférieur ou égal à 1 mm et une longueur inférieure ou égale à son diamètre. A titre d'exemple, le diamètre et la profondeur des orifices 4a - 4d valent respectivement 0,8 mm et 0,5 mm.

Le nombre des orifices, égal à 4 dans l'exemple exposé, est choisi de manière à viser des zones de gaz frais dans la chambre principale 1. Avantageusement, on détermine le nombre et la répartition des orifices de manière à optimiser la montée en pression.

En fonctionnement, on introduit un mélange air-carburant dans la chambre principale 1 et on alimente la préchambre 2 au moyen de l'arrivée 5, de manière à créer un mélange riche dans cette préchambre 2. On produit ensuite une étincelle entre les électrodes 21 et 22, en déclenchant ainsi la combustion dans la préchambre 2, de telle sorte que la température et la pression augmentent en son sein. Une zone réactive 30 riche en composé instable se forme ainsi dans la préchambre 2.

Sous l'effet de la pression plus élevée dans la préchambre 2 que dans la chambre principale 1, les composés instables sont expulsés sous forme de flux 31 vers la chambre principale 1. La différence de pression entre la préchambre 2 et la chambre principale 1 et les dimensions des orifices 4a-4d provoquent une extinction de flamme au passage de la paroi 3, de telle sorte qu'aucun front de flamme ne se propage dans la chambre principale 1. Ainsi, la charge principale contenue dans la chambre principale 1 est ensemencée avec les composés instables.

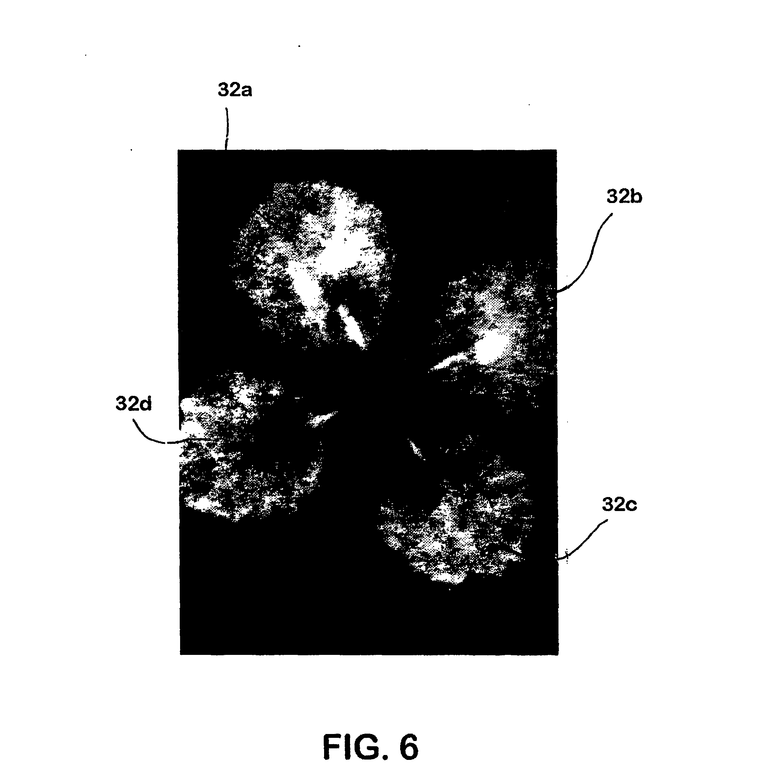

Lors de la remontée du piston 17 dans la chambre principale 1, la compression produite provoque une auto-inflammation en masse du mélange principal loin des parois de la chambre principale 1, sous forme de poches de combustion 32a - 32d (voir Figures 1 et 6) correspondant respectivement aux orifices 4a - 4d. L'oxydation de la charge principale se déroule alors extrêmement vite.

Un exemple comparatif met en évidence les avantages obtenus avec le dispositif d'allumage décrit ci-dessus, par rapport à un dispositif d'allumage commandé traditionnel avec bougie. Dans cet exemple, le carburant employé est celui commercialisé sous le nom Essence sans plomb 98, la richesse du mélange dans la chambre principale vaut 1,00 et la pression absolue moyenne du collecteur admission est égale à 950 mbar. Les résultats obtenus sont visualisés aux Figures 3 à 5. Sur ces Figures, les références numériques suivies de A concernent le dispositif traditionnel et les références numériques suivies de B concernent le dispositif avec extinction de flamme.

L'angle vilebrequin (DV) et la pression cylindre (bar) étant respectivement donnés par les axes 41 et 42, les courbes 50A et 50B sont respectivement tracées sur la Figure 3 pour le dispositif traditionnel et le dispositif avec extinction de flamme. Chacune de ces courbes 50 comporte, après une montée initiale en pression due à la compression, un point d'allumage 52 suivi d'une montée en pression 53 culminant en un sommet 54, puis d'une descente en pression 55.

On observe que la montée en pression 53B du dispositif avec extinction de flamme est sensiblement plus raide que celle 53A du dispositif traditionnel. De plus, l'avance à l'allumage vaut 32 DV pour le dispositif traditionnel et seulement 10 DV pour le dispositif avec extinction de flamme. Ainsi, le dispositif décrit ci-dessus permet d'obtenir un front de pression à la fois retardé et plus raide par rapport à des dispositifs traditionnels à allumage commandé.

Le volume (cm³) dans la chambre principale étant donné par un axe 43 et la pression cylindre par l'axe 42, des courbes 60A et 60B sont tracées respectivement pour les dispositifs traditionnel et avec extinction de flamme, sur la Figure 4. Les surfaces 61A et 61B délimitées respectivement par les courbes 60A et 60B ont chacune une aire correspondant au travail fourni. On observe une zone 62 couverte par la surface 61B mais pas par la surface 61A, cette zone 62 étant associée au front de pression raide produit pour le dispositif avec extinction de flamme. Ainsi, le rendement est plus élevé pour le dispositif avec extinction de flamme que pour celui traditionnel.

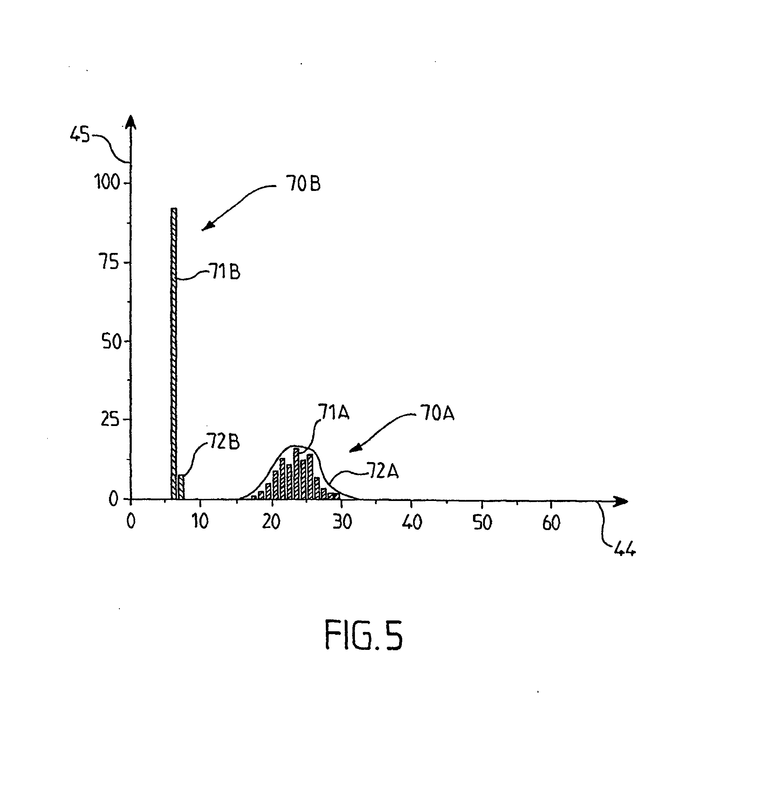

Des histogrammes 70A et 70B (Figure 5) montrent respectivement pour le dispositif traditionnel et pour le dispositif avec extinction de flamme le nombre d'occurrences (%) selon un axe 45 en fonction de la durée de combustion à 5% (DV) de la charge principale selon un axe 44.

On observe que l'histogramme 70A est dispersé autour d'un pic 71A à environ 23 DV et décrit une courbe en cloche 72A s'étendant sur une quinzaine de DV. En revanche, l'histogramme 70B est presque entièrement concentré dans un unique pic 71B, qui culmine à plus de 92%, et qui est complété par un petit pic secondaire 72B. Les deux pics sont centrés autour d'environ 6,5 DV.

Il apparaît ainsi que le dispositif avec extinction de flamme procure une régularité cyclique considérablement plus élevée et une durée de combustion et une dispersion considérablement plus réduites qu'avec le dispositif traditionnel. Les mêmes observations valent également pour une combustion à des pourcentages plus élevés que 5% de la charge principale.

## Revendications

1. Dispositif d'allumage d'un moteur à combustion interne, comprenant:
- une chambre principale (1) destinée à contenir un mélange combustible principal, et munie d'un système de compression (17, 18) dudit mélange ;
- une préchambre (2) destinée à recevoir des réactifs, ladite préchambre (2) communiquant avec la chambre principale (1) par au moins un passage (4a - 4d), et
- un système d'allumage (21-22) des réactifs contenus dans la préchambre (2),
**caractérisé en ce que** ledit passage (4a-4d) entre la préchambre (2) et la chambre principale (1) a un diamètre inférieur à 1 mm pour empêcher le passage d'un front de flamme tout en permettant le passage de composés instables (31) provenant de la combustion des réactifs contenus dans la préchambre (2), le système de compression (17, 18) de la chambre principale (1) et l'ensemencement du mélange principal en lesdits composés instables permettant une auto-inflammation en masse du mélange principal.

2. Dispositif d'allumage selon la revendication 1, **caractérisé en ce que** ledit passage (4a-4d) entre la préchambre (2) et la chambre principale (1) est constitué par un orifice (4a-4d) pratiqué dans une paroi de séparation (3) imperméable aux composés instables.

3. Dispositif d'allumage selon la revendication 2, **caractérisé en ce que** l'orifice (4a-4d) a une longueur inférieure ou égale à son diamètre.

4. Dispositif d'allumage selon la revendication 1, **caractérisé en ce que** la préchambre (2) et la chambre principale (1) sont séparées par une paroi de séparation (3) choisie parmi une grille et une cloison formée d'un matériau poreux.

5. Dispositif d'allumage selon l'une quelconque des revendications 1 à 4, **caractérisé en ce qu'**il comporte des moyens d'alimentation de la préchambre (2) en un mélange riche en carburant et des moyens d'alimentation de la chambre principale (1) en un mélange pauvre en carburant.

6. Procédé d'allumage d'un moteur à combustion interne, selon lequel:
- on introduit un mélange combustible principale dans une chambre principale (1) et des réactifs dans une préchambre (2) communiquant avec la chambre principale par au moins un passage (4a-4d), ledit passage (4a-4d) ayant un diamètre inférieur à 1 mm,
- on brûle les réactifs contenus dans la préchambre (2), et
- on provoque une inflammation du mélange principal à partir de la combustion desdits réactifs,
- on laisse passer des composés instables (31) issus de la combustion desdits réactifs et on empêche tout passage d'un front de flamme, de la préchambre (2) vers la chambre principale (1), au moyen dudit passage (4a-4d), et
on provoque une auto-inflammation en masse du mélange principal ensemencé desdits composés instables dans la chambre principale (1).

7. Générateur de composés instables pour un dispositif d'allumage selon l'une quelconque des revendications 1 à 5 comportant un corps (13) avec filetage extérieur (14) contenant une cavité intérieure constituant une préchambre (2), une arrivée (5) permettant d'alimenter la préchambre (2) en un mélange air-combustible, constitué en amont, ou en carburant, la préchambre (2) étant munie d'un système d'allumage comprenant une électrode centrale (21) et une électrode de masse (22), la cavité intérieure étant fermée par une paroi de séparation (3) pourvue de différents orifices (4a-4d) de diamètre inférieur à 1 mm.

## Patentansprüche

1. Vorrichtung zur Zündung einer Brennkraftmaschine, enthaltend
- eine Hauptkammer (1), die zum Aufnehmen eines Hauptbrennstoffgemisches bestimmt und mit einem Verdichtungssystem (17, 18) für das Gemisch versehen ist,
- eine Vorkammer (2), die zum Aufnehmen von Reagenzien bestimmt ist, wobei die Vorkammer (2) mit der Hauptkammer (1) über mindestens eine Passage (4a-4d) kommuniziert, und
- ein Zündungssystem (21-22) für die in der Vorkammer enthaltenen Reagenzien (2),
**dadurch gekennzeichnet, dass** die Passage (4a-4d) zwischen der Vorkammer (2) und der Hauptkammer (1) einen Durchmesser kleiner als 1 mm aufweist, um das Passieren einer Flammenfront zu vermeiden und gleichzeitig das Passieren instabiler Verbindungen (31), die von der Verbrennung der in der Vorkammer (2) enthaltenen Reagenzien stammen, zu erlauben, wobei das Verdichtungssystem (17, 18) der Hauptkammer (1) und das Impfen des Hauptgemischs mit den instabilen Verbindungen ein Selbstentzünden der Masse des Hauptgemischs erlauben.

2. Vorrichtung zur Zündung nach Anspruch 1, **dadurch gekennzeichnet, dass** die Passage (4a-4d) zwischen der Vorkammer (2) und der Hauptkammer (1) aus einer Öffnung (4a-4d) besteht, die in einer Trennwand (3) angelegt ist, die für die instabilen Verbindungen undurchlässig ist.

3. Vorrichtung zur Zündung nach Anspruch 2, **dadurch gekennzeichnet, dass** die Öffnung (4a-4d) eine Länge hat, die kleiner oder gleich ihrem Durchmesser ist.

4. Vorrichtung zur Zündung nach Anspruch 1, **dadurch gekennzeichnet, dass** die Vorkammer (2) und die Hauptkammer (1) durch eine Trennwand (3) getrennt sind, die aus einem Gitter und einer aus einem porigen Werkstoff hergestellten Wand ausgewählt ist.

5. Vorrichtung zur Zündung nach einem der Ansprüche 1 bis 4, **dadurch gekennzeichnet, dass** sie Mittel zur Versorgung der Vorkammer (2) mit einem kraftstoffreichen Gemisch und Mittel zur Versorgung der Hauptkammer (1) mit einem kraftstoffarmen Gemisch aufweist.

6. Verfahren zur Zündung einer Brennkraftmaschine, gemäß dem
- man ein Hauptbrennstoffgemisch in eine Hauptkammer (1) und Reagenzien in eine Vorkammer (2), die mit der Hauptkammer über mindestens eine Passage (4a-4d) kommuniziert, einführt, wobei die Passage (4a-4d) einen Durchmesser von kleiner als 1 mm hat,
- man die in der Vorkammer (2) enthaltenen Reagenzien verbrennt, und
- man ein Entflammen des Hauptgemischs, ausgehend von der Verbrennung der Reagenzien, verursacht,
- man die instabilen Verbindungen (31), die aus der Verbrennung der Reagenzien hervorgehen, passieren lässt und jedes Passieren einer Flammenfront von der Vorkammer (2) zur Hauptkammer (1) über die Passage (4a-4d) verhindert, und
man eine Selbstentzündung der Masse des Hauptgemischs hervorruft, das mit den instabilen Verbindungen in der Hauptkammer (1) geimpft wird.

7. Erzeuger instabiler Verbindungen für eine Vorrichtung zur Zündung nach einem der Ansprüche 1 bis 5, mit einem Körper (13) mit Außengewinde (14), der einen Innenhohlraum aufweist, der eine Vorkammer (2) bildet, einer Zuleitung (5), die die Versorgung der Vorkammer (2) mit einem Gemisch aus Luft und Kraftstoff, das zuströmseitig hergestellt wird, oder mit Kraftstoff erlaubt, wobei die Vorkammer (2) mit einem System zur Zündung versehen ist, das eine zentrale Elektrode (21) und eine Masseelektrode (22) aufweist, und wobei der Innenhohlraum durch eine Trennwand (3) verschlossen ist, die mit verschiedenen Öffnungen (4a-4d) mit einem Durchmesser kleiner als 1 mm versehen ist.

## Claims

1. A device for igniting an internal combustion engine, comprising:
- a main chamber (1), intended to contain a main fuel mixture and provided with a system (17, 18) for compressing said mixture;
- a prechamber (2) intended to receive reagents, said prechamber (2) communicating with the main chamber (1) through at least one passageway (4a-4d), and
- a system (21, 22) for igniting the reagents contained in the prechamber (2),
**characterised in that** said passageway (4a-4d) between the prechamber (2) and the main chamber (1) has a diameter smaller than 1 mm, in order to prevent the intrusion of flame front while letting through unstable compounds (31) derived from the combustion of the reagents contained in the prechamber (2), the compression system (17, 18) of the main chamber (1) and the seeding of the main chamber while said unstable compounds enable bulk self-ignition of the main mixture.

2. An ignition device according to claim 1, **characterised in that** said passageway (4a-4d) between the prechamber (2) and the main chamber (1) consists of an orifice (4a-4d) made in a separating wall (3) which is tight to unstable compounds.

3. An ignition device according to claim 2, **characterised in that** the orifice (4a-4d) has a length smaller than or equal to its diameter.

4. An ignition device according to claim 1, **characterised in that** the prechamber (2) and the main chamber (1) are separated by a separating wall (3) selected among a grid and a wall formed of a porous material.

5. An ignition device according to any one of claims 1 to 4, **characterised in that** it comprises means for feeding the prechamber (2) with a fuel-enriched mixture and means for feeding the main chamber (1) with a fuel-depleted mixture.

6. A method for igniting an internal combustion engine, wherein:
- a fuel mixture is injected into a main chamber (1) and reagents are injected into a prechamber (2) communicating with the main chamber via at least one passageway (4a-4d), whereas said passageway (4a-4d) has a diameter smaller than 1 mm,
- the reagents contained in the prechamber (2) are burned, and
- the main mixture derived from the combustion of said reagents is ignited,
- unstable compounds (31) derived from the combustion of said reagents are let through and any flame front is precluded from the prechamber (2) toward the main chamber (1), via said passageway (4a-4d) and
the main mixture seeded with said unstable compounds in the main chamber (1) is self-ignited in bulk.

7. A generator of unstable compounds for an ignition device according to any one of claims 1 to 5 comprising a body (13) with an external thread (14) containing an internal cavity forming a prechamber (2), an inlet (5) enabling to feed the prechamber (2) with an air-fuel mixture, formed upstream, with a fuel, whereas the prechamber (2) is provided with an ignition system comprising a main electrode (21) and a ground electrode (22), whereas the internal cavity is enclosed by a separating wall (3) provided with different orifices (4a-4d) of diameter smaller than 1 mm.
